# EUROPEAN PATENT SPECIFICATION

(11) **EP 2 978 143 B1**
(45) Date of publication and mention of the grant of the patent: **22.04.2020**
(21) Application number: 14290213.9
(22) Date of filing: 22.07.2014
(51) Int. Cl.: H04B 7/155

(54) **A method of transmitting information, a method of receiving information, and a relay station**
Verfahren zum Senden von Informationen, Verfahren zum Empfangen von Informationen, und Relaisstation
Procédé de transmission d'informations, procédé de réception d'informations, et station de relais

(43) Date of publication of application: 27.01.2016
(73) Proprietor: Alcatel Lucent, 91620 Nozay (FR)
(72) Inventor: Kucera, Stepan, Dublin 15 (IE); Pivit, Florian, Dublin 15 (IE); Mullany, Francis Joseph, Dublin 15 (IE)
(74) Representative: Nokia EPO representatives

(56) References cited:
- EP-A2- 0 344 624
- WO-A1-2010/034341
- US-A- 3 028 489
- US-A- 4 198 600

## Description

### Field of the Invention

The present invention relates to telecommunications, in particular to wireless telecommunications.

### Description of the Related Art

Energy efficient small cell base stations are known to be deployed as low-complexity repeaters. Repeaters are also known as relays, repeater stations and relay stations. A low-complexity repeater relies on the processing capability of the target gateway to which the repeater is connected. This is in order to reduce power usage in the repeater to a low level, for example so a small solar panel is sufficient to power the repeater.

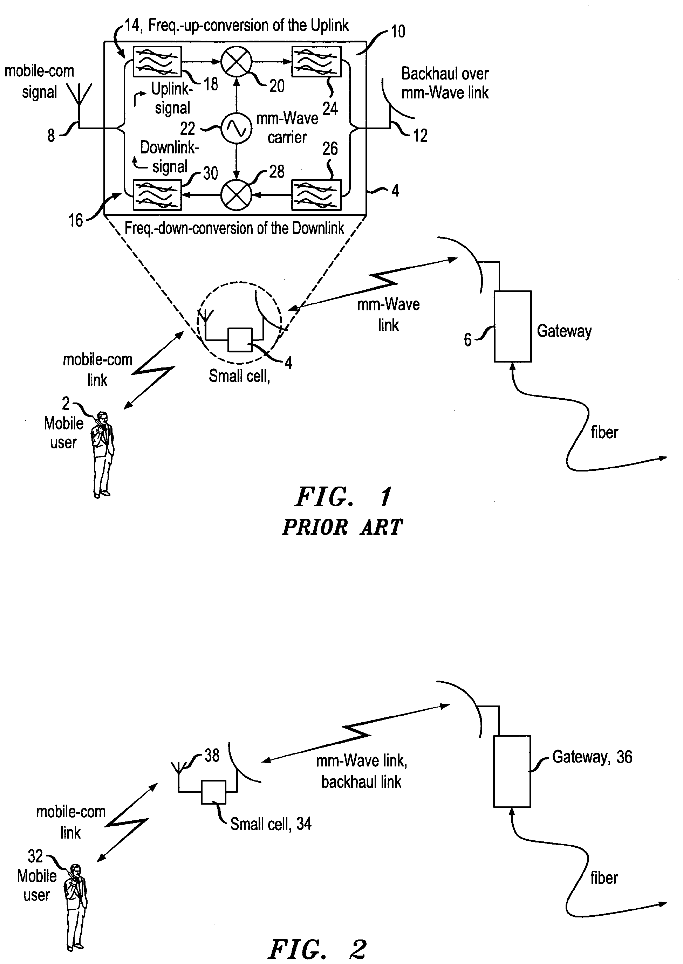

As shown in Figure 1, a known repeater 4 includes a mobile communication antenna 8 connected by frequency conversion circuitry 10 to an antenna 12 for electromagnetic radiation of the order of millimetre wavelengths ("mmWave antenna"). The frequency conversion circuitry 10 includes a frequency-up-conversion branch 14 and a frequency-down-conversion branch 16.

The frequency-up-conversion branch 14 includes, from the mobile communications antenna 8, a first band pass filter 18 connected to a modulator 20 that is connected to a mmWave signal source 22. The modulator 20 is connected to a second band pass filter 24 connected to the mmWave antenna 12.

The frequency-down-conversion branch 16 includes, from the mmWave antenna 12, a band pass filter 26 connected to a demodulator 28 that is connected to the mmWave signal source 22. The demodulator 28 is connected to a further band pass filter 30 connected to the mobile communications antenna 8.

In operation in the uplink direction, namely from a user terminal 2 to a target gateway 6, the information-carrying signal received from the user terminal 2 at a first carrier frequency is frequency- up -converted to a higher carrier frequency which is used to transmit the information to the gateway 6. In the gateway 6, the signal is received, back-converted and decoded. This is a purely analog process, as opposed to a digital process and involves no alteration of the signal itself other than the change of carrier frequency.

In operation in the downlink direction, namely from the gateway 6 to the user terminal 12, data is modulated onto the carrier frequency of the mmWave backhaul link and transmitted to the small cell base station 4. At the small cell base station 4, the received signal is down-converted to the downlink frequency of the user terminal 2 and transmitted to the user terminal 2.

It will be understood that the small cell base station 4 acts to up-convert and down-convert signals, but no additional signal processing is performed, in particular no digital signal processing.

Despite this simple functionality of the small cell base station, it is known that a signalling channel between the small cell base station and gateway needs to be established. This signalling channel is required for functions like waking-up the small cell base station or powering-down the small cell base station to an inactive, low power usage, state. This is especially important in low-power small cells and self-sustained small cells, as these need to be powered-up only when required and cannot be kept in a high-energy-consuming stand-by mode for long periods. A signalling channel is also required for other functions, for example sending system health and performance data, indicating battery status, and sending configuration commands, from the user terminal 2 to the gateway and vice versa.

The signalling channel between the gateway and user terminal needs to consume little power. A known approach is to establish a dedicated signalling channel alongside the main backhaul transport channel. This signalling channel is separated from the main channel in radio frequency, code, logical layer or time.

Reference is made to WO-2010/034341 A1 disclosing a relay being controlled by a control unit via a base station, including turning the relay on and off.

### Summary

The invention is defined by the independent claims 1 and 10. Preferred embodiments are set out in the dependent claims.

### Brief Description of the Drawings

Embodiments of the present invention will now be described by way of example and with reference to the drawings, in which:
Figure 1 is a diagram illustrating both a known small cell base station having a known mmWave wireless link to a known gateway, and in an expanded view, the repeater and frequency translation functionality of the known small cell base station (PRIOR ART),
Figure 2 is a diagram illustrating a small cell base station connecting a gateway and user terminal according to a first embodiment of the present invention,
Figure 3 is a diagram illustrating the small cell base station shown in Figure 2 in more detail involving amplitude modulation/demodulation,
Figure 4 is a schematic of the amplitude-modulation based uplink functionality of the gateway in the embodiment shown in Figure 2,
Figure 5 is a diagram illustrating a small cell base station according to a second embodiment of the invention in which the small cell base station includes an injection circuit for a fixed code sequence so as to provide CDMA based uplink messaging, and
Figure 6 is a schematic of the functionality of the gateway according to this second embodiment in which CDMA based uplink messaging is used.

### Detailed Description

The inventors realised that in the known approaches, irrespective of whether the signalling channel is separated from the main backhaul link by radio frequency, code, logical layer or time, the known approaches require significant data processing down to base band level, for example to embed the signalling data into load data or as a separate signalling channel. This increases power consumption.

The inventors realised that such methods should be avoided especially where the small cell base station is mainly implemented to act as a repeater, providing a mmWave link but otherwise having no (or very limited) signal processing functionality. The inventors realised that methods should be avoided that require the remote end of the mmWave link, for example the user terminal, to perform these signal processing functions at various times, thereby limiting the possibly to power down the user terminal for energy saving purposes.

In brief, the inventors realised that the known approaches were not well suited to use in low-power nodes providing wireless backhaul links.

The inventors realised that it is possible to embed the signalling information to be transmitted between the small cell base station and the gateway into the mobile communication signal itself. Two possible methods will be described.

The signalling information may be status or other information in respect of the relay station; for example any of or any combination of: serial number and/or other identifier, neighbour activity list, battery charge level and/ or battery charge rate, past measurements, traffic information for example loading level, and /or other information regarding the status of, or local environment experienced by, the relay station.

The first method consists in amplitude-modulating the backhaul signal itself and is primarily suitable for signalling uplink to the gateway. The second method consists of embedding an additional, preferably wideband signal onto the carried mobile communication signal. The second method is suitable for both uplink and downlink communications. Both methods have the advantages that the data carried by the mobile communication signal is not impaired by the added signalling, the quality of the link between the user terminal and gateway is maintained, and only the radio frequency spectrum allocated to the mobile communication signal is made use of. We now describe the two methods in turn in more detail.

### Amplitude Modulation of Relayed signal

This method is low in power consumption and does not impair the traffic load data being transmitted. The amplitude modulation of the signal carrying the traffic load data with the signalling data is performed either by applying an adjustable attenuation or by modulation of the supply voltage of the power amplifier of the transmitter. No extra carrier signal is implemented nor transport channel radio chain, and little extra hardware is required.

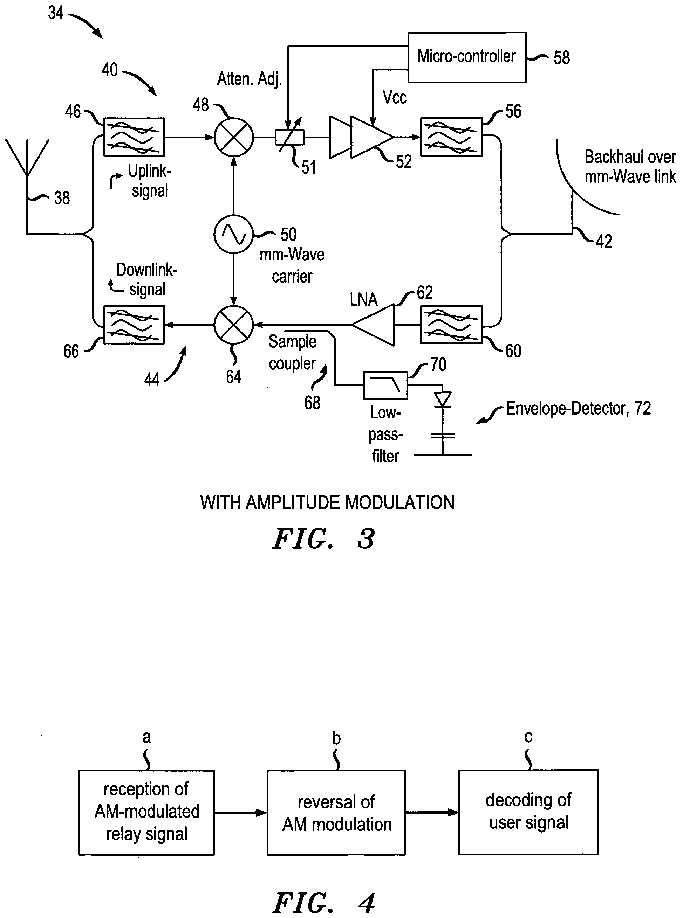

As shown in Figure 2, a user terminal 32, which is a mobile user equipment for cellular wireless telecommunications, is connected via a small cell base station 34 with a gateway 36. The small base station 34 may be considered as a repeater or relay. As shown in Figures 2 and 3, the small cell base station 34 includes a mobile communication antenna 38 connected by uplink circuitry 40 to a mmWave antenna 42. The mmWave antenna 42 is also connected by downlink circuitry 44 to the mobile communication antenna 38. "mmWave" denotes electromagnetic radiation of the order of millimetre wavelengths.

The uplink circuitry 40 includes, from the mobile communications antenna 38, a first band pass filter 46 connected to a modulator 48 for frequency up-conversion that is connected to a mmWave signal source 50. The modulator 48 is connected via an adjustable attenuator 51 and voltage control amplifier 52 to a second band pass filter 56 connected to the mmWave antenna 42. The adjustable attenuator 51 and voltage control amplifier 52 are both connected to a microprocessor 58 which acts to modulate the amplitude of the signal passing through either by attenuation or by amplification control.

The downlink circuitry 44 includes, from the mmWave antenna 42, a band pass filter 60 connected to a low noise amplifier 62 connected to a demodulator 64 for frequency down-conversion that is connected to the mmWave signal source 50. The demodulator 64 is connected to a further band pass filter 66 connected to the mobile communications antenna 38.

Between the low noise amplifier 62 and the demodulator 64 is a sample coupler 68 connected via a low pass filter 70 to an envelope detector 72.

In the uplink a low frequency modulation is applied to the data carrier channel so as the embed signalling information into the carrier channel itself. In this example, the total channel power is modulated by the order of 1 dB. This amplitude modulation is performed, in one mode by digitally adjusting the attenuation of adjustable attenuator 51, or in another mode by controlling the gain of the power amplifier 52. In both cases, this provides a binary (on/off) amplitude modulation of the signal for transmission via the mmWave antenna 42 to the gateway 36.

In this example, a low modulation frequency of several tens or hundreds of kiloHertz is applied. With this low frequency modulationa signalling data rate in the order of several tens to hundreds of kilobits per second is available. This is enough bandwidth to transport simple data as to status and performance from the small cell base station 34 to the gateway 36.

At the gateway 36, as the gateway 36 knows the level of amplitude modulation, the modulation frequency and error correction information, the signal carrying the main channel data before modulation is retrieved from the modulated carrier. Also, retrieval of the embedded signalling data from the modulated carrier is undertaken by the gateway 36 in the digital domain, using standard digital down-conversion, digital filtering and error-correction processes.

It will be appreciated that this method of signalling does not interfere with the transport of the main channel data as the amplitude modulation is well below the link margin of several dB, and the frequency of the modulation is well within the frequency range of fading phenomena that have to be handled in the connection to the user terminal. Link margin is the difference between a receiver's sensitivity (i.e. the received power at which the receiver will stop working) and the actual/expected received power.

It will also be appreciated that this method of signalling does not interfere with an automatic gain control loop of the system. Instead uplink channel quality indicators (CQIs) are derived from the downlink channel quality measured at user terminals and so no closed automatic gain control loop is applied.

On the downlink, effectively an inverse function is applied. In the small cell base station 34, as shown in Figure 3, the downlink signal is sampled by the sample coupler 68. In this example the sampling of the downlink signal is done before frequency down-conversion by multiplexer 64. In another otherwise similar example, (not shown) the sampling is done after frequency down-conversion by the multiplexer. The sampled signal from the sample coupler 68 is filtered by the low pass filter 70, demodulated in the simple envelope detector 72, and is afterwards decoded in a decoder (not shown).

The microprocessor is the controller of the amplitude modulation/ demodulation processes and is provided in the small cell base station for various other control functions also.

As regards the RF power available at the small cell base station 34 which is acting as a repeater/relay, due to the high signal attenuations experienced by wireless links, particular links of millimetre wavelengths, a large power budget is allocated to compensate for fading due to rain, fog, foliage etc. A part of this power budget is used to provide the amplitude modulation of the carrier signal in order to provide the signalling link between the gateway 36 and the user terminal 2.

### Gateway

As shown in Figure 4, as regards the gateway 36, the relayed signal is received at the gateway (step a), the amplitude modulation is reversed (step b) and the actual user signal is then decoded (step c). The amplitude modulation reversal is required in this example as the absolute value of the user signal amplitude is measured, specifically for path loss estimation and absolute power control purposes. Of course, the amplitude modulation does not affect relative comparisons of sub-signals, for example relative comparisons of sounding reference signals for scheduling purposes.

In this example, the amplitude modulation reversal is by removal of the variations in the amplification gain. This is straight-forward since the gain variation occurs in integer multiples of the period of the small cell base station's added signalling data. That period is a fixed system constant. Furthermore, no significant relative mobility between the small cell base station 34 and the gateway 36 is expected due to their static deployment at fixed locations and their typically line-of-sight transmission mode. At most minor vibrations due to wind or automotive traffic may be expected. In consequence, no significant fading, in other words no natural drops in amplitude, obscure the shifts between periods in which the signal is being amplified by the variable amplifier and periods when that signal is not being amplified. In periods when that signal is not being amplified, the original non-amplitude-adjusted signal is being relayed.

### Fixed Sequence Injection to the Relayed signal

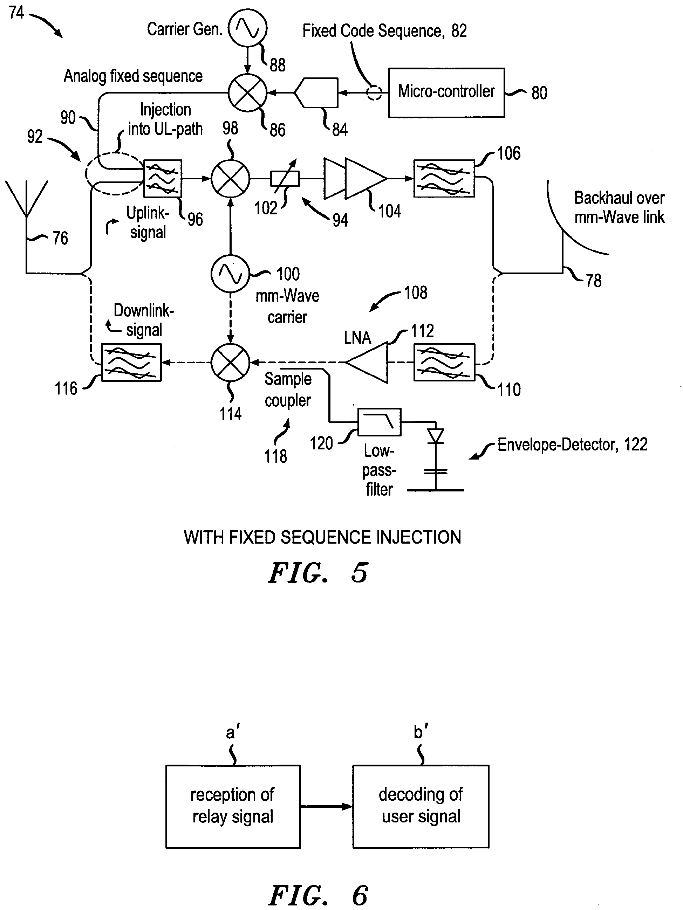

In this second example, the small cell base station 74 is as shown in Figure 5. A user terminal (not shown) is connected via the small cell base station with a gateway (not shown).

As shown in Figure 5, the small cell base station 74 includes a mobile communication antenna 76 for wireless connection with the user terminal and a mmWave antenna 78 for connection with the gateway.

As shown in Figure 5, a microcontroller 80 generates a fixed digital code sequence 82 which is received at an input 84, up-converted, using a modulator 86 connected to a carrier signal generator 88 to provide a wideband analog baseband signal 90, and then injected into the uplink signal path at a coupler 92.

In this way, the fixed digital code signal is modulated onto the carrier frequency and embedded into the main channel in similar fashion to the amplitude modulation example described above. For completeness, this is now described in detail.

As shown in Figure 5, uplink circuitry 94 includes, from the mobile communications antenna 76, a first band pass filter 96 connected to a modulator 98 for frequency up-conversion that is connected to a mmWave signal source 100. The modulator 98 is connected via an adjustable attenuator 102 and voltage control amplifier 104 to a second band pass filter 106 connected to the mmWave antenna 78.

Downlink circuitry 108 includes, from the mmWave antenna 78, a band pass filter 110 connected to a low noise amplifier 112 connected to a demodulator 114 for frequency down-conversion that is connected to the mmWave signal source 100. The demodulator 114 is connected to a further band pass filter 116 connected to the mobile communications antenna 76. Between the low noise amplifier 112 and the demodulator 114 is a sample coupler 118 connected via a low pass filter 120 to an envelope detector 122.

The auxiliary data transmission (of signalling data from the small cell base station) is implemented by controlling when the fixed digital code sequence is embedded in the main/primary signal. For example, the absence of the fixed digital code sequence in the signal received from the small cell base station is interpreted at the receiver (gateway or user terminal) as transmission of a digital "0".Conversely, the presence of the fixed digital code sequence corresponds to transmission of a digital "1".

In this example, the fixed digital code sequence is a predefined data sequence multiplied by a given code sequence as known from Code Division Multiple Access (CDMA) systems. This method of signalling interferes very little with the transport of the main channel data as the fixed digital code sequence is an injected CDMA signal of very low energy being near noise level, due to the advantageous effect of CDMA spreading.

Compared to amplitude modulation approach described with reference to Figures 2 to 4, the fixed sequence injection approach described with reference to Figure 5 has less interference of the main channel and the possibility of better data rates. In the fixed sequence injection approach, achievable data rates are limited only by the physical coding and decoding capabilities of the transmitter and receiver (small cell base station and gateway).

As regards the gateway (not shown), as shown in Figure 6, reception (step a') of the signal relayed from a user terminal is followed by decoding (step b') of the signal. The process of CDMA-like spreading over a large bandwidth significantly reduces the signal power compared to the primary signal which is of Orthogonal Frequency Division Multiplex (OFDM) type. This reduction is typically to below the noise level of the OFDM signal. Hence, reception by the gateway in the fixed sequence injection approach as shown in Figure 6 does not have significant effect on the general uplink user signal processing. This is in contrast to reception by the gateway described above in respect of Figure 4 for the amplitude modulation approach where there is a signaificant effect on general uplink user signal processing, namely involving reversal of amplitude modulation.

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of transmitting information associated with a relay station (34) from the relay station via a user signal, the method comprising:
modulating by the relay station the information associated with the relay station onto the user signal at a first frequency band or a second frequency band; and
transmitting by the relay station the modulated signal;
in which the user signal carries data associated with a user terminal (32), the signal passing from the relay station to a gateway (36) connected to the relay station;
the relay station communicating with the user terminal in the first frequency band and communicating with the gateway in the second frequency band which is different to the first frequency band, in which the relay station receives the signal at one of the first frequency band and the second frequency band and converts the signal to the other of the first frequency band and second frequency band for transmission;
in which the information comprises status information in respect of the relay station; and in which the relay station retransmits the user signal from the user terminal to the gateway, whilst adding the status information to the user signal by means of modulation (48, 50, 51, 52, 58) through attenuation or amplification control.

2. A method of transmitting according to claim 1, in which the relay station is a small cell base station.

3. A method according to any preceding claim, in which the second frequency band is higher than the first frequency band.

4. A method according to any of claims 1 to 3, in which the second frequency band is a millimetre wave or microwave frequency band.

5. A method according to any preceding claim, in which the modulating comprises modulating the information onto the signal at the second frequency band, and the modulated signal is transmitted (42) towards the gateway.

6. A method according to any of claims 1 to 4, in which the modulating comprises modulating the information onto the signal at the first frequency band, and the modulated signal is converted to the second frequency band and transmitted towards the gateway.

7. A method according to any preceding claim, in which the modulating comprises modulating the information onto the signal by amplitude modulation.

8. A method according to any preceding claim, further comprising the relay station receiving from the gateway and decoding a control message for the relay station modulated onto a data message for transmission to the user terminal, the data message being frequency-converted by the relay station from the second frequency band to the first frequency band for transmission to the first node.

9. A method according to any preceding claim, further comprising:
receiving at at least one of the user terminal and the gateway the signal modulated at the relay station with the information associated with the relay station, and demodulating the information from the signal to obtain the information and the signal.

10. A relay station (34) configured to send information associated with the relay station via a user signal,
in which the signal carries data associated with a user terminal, the signal passing between the relay station and a gateway;
the relay station being configured to communicate with the user terminal (32) in a first frequency band which is a band for cellular mobile telecommunications and configured to communicate with the gateway (36) in a second frequency band;
the relay station comprises a receiver and a convertor, the receiver being configured to receive the signal at one of the first frequency band and the second frequency band and the convertor being configured to convert the signal to the other of the first frequency and second frequency band for transmission;
the relay station further comprising a modulator and a transmitter, the modulator being configured to modulate the information onto the signal at the first frequency band or second frequency band, and the transmitter being configured to transmit the modulated signal;
in which the information comprises status information in respect of the relay station; and in which the relay station is adapted to retransmit the user signal from the user terminal to the gateway, whilst adding the status information to the user signal by means of modulation (48, 50, 51, 52, 58) through attenuation- or amplification control.

## Patentansprüche

1. Verfahren zum Übertragen von Informationen, die mit einer Relaisstation (34) verknüpft sind, von der Relaisstation über ein Benutzersignal, wobei das Verfahren umfasst:
Modulieren, durch die Relaisstation, der Informationen, die mit der Relaisstation verknüpft sind, auf das Benutzersignal in einem ersten Frequenzband oder einem zweiten Frequenzband; und
Übertragen, durch die Relaisstation, des modulierten Signals;
wobei das Benutzersignal Daten transportiert, die mit einem Benutzerendgerät (32) verknüpft sind, wobei das Signal von der Relaisstation an ein Gateway (36) übergeben wird, das mit der Relaisstation verbunden ist;
wobei die Relaisstation mit dem Benutzerendgerät in dem ersten Frequenzband kommuniziert und mit dem Gateway in dem zweiten Frequenzband, das von dem ersten Frequenzband verschieden ist, kommuniziert, wobei die Relaisstation das Signal in einem von dem ersten Frequenzband und dem zweiten Frequenzband empfängt und das Signal zur Übertragung in das jeweils andere von dem ersten Frequenzband und dem zweiten Frequenzband umwandelt;
wobei die Informationen Statusinformationen in Bezug auf die Relaisstation umfassen; und wobei die Relaisstation das Benutzersignal erneut von dem Benutzerendgerät an das Gateway überträgt, während die Statusinformationen dem Benutzersignal mittels Modulation (48, 50, 51, 52, 58) durch Dämpfungs- oder Verstärkungssteuerung hinzugefügt werden.

2. Übertragungsverfahren gemäß Anspruch 1, bei dem die Relaisstation eine Kleinzellen-Basisstation ist.

3. Verfahren gemäß einem vorstehenden Anspruch, wobei das zweite Frequenzband höher ist als das erste Frequenzband.

4. Verfahren gemäß einem der Ansprüche 1 bis 3, wobei das zweite Frequenzband ein Millimeterwellen- oder Mikrowellen-Frequenzband ist.

5. Verfahren gemäß einem der vorstehenden Ansprüche, wobei das Modulieren das Modulieren der Informationen auf das Signal in dem zweiten Frequenzband umfasst und das modulierte Signal an das Gateway übertragen (42) wird.

6. Verfahren gemäß einem der Ansprüche 1 bis 4, wobei das Modulieren das Modulieren der Informationen auf das Signal in dem ersten Frequenzband umfasst und das modulierte Signal in das zweite Frequenzband konvertiert und an das Gateway übertragen wird.

7. Verfahren gemäß einem der vorstehenden Ansprüche, wobei das Modulieren das Modulieren der Informationen auf das Signal durch Amplitudenmodulation umfasst.

8. Verfahren gemäß einem der vorstehenden Ansprüche, ferner umfassend, dass die Relaisstation vom Gateway eine Steuernachricht für die Relaisstation empfängt und decodiert, welche auf eine Datennachricht zur Übertragung an das Benutzerendgerät moduliert ist, wobei die Datennachricht durch die Relaisstation zur Übertragung an den ersten Knoten von dem zweiten Frequenzband in das erste Frequenzband frequenzkonvertiert wird.

9. Verfahren gemäß einem der vorstehenden Ansprüche, ferner umfassend:
Empfangen, an wenigstens einem von dem Benutzerendgerät und dem Gateway, des Signals, das an der Relaisstation mit den Informationen, die mit der Relaisstation verknüpft sind, moduliert wird, und Demodulieren der Informationen aus dem Signal, um die Informationen und das Signal zu erhalten.

10. Relaisstation (34), die dafür ausgelegt ist, Informationen, die mit der Relaisstation verknüpft sind, über ein Benutzersignal zu senden,
wobei das Signal Daten transportiert, die mit einem Benutzerendgerät verknüpft sind, wobei das Signal zwischen der Relaisstation und einem Gateway übergeben wird;
wobei die Relaisstation dafür ausgelegt ist, mit dem Benutzerendgerät (32) in einem ersten Frequenzband zu kommunizieren, welches ein Band für die zellulare mobile Telekommunikation ist, und dafür ausgelegt ist, mit dem Gateway (36) in einem zweiten Frequenzband zu kommunizieren;
wobei die Relaisstation einen Empfänger und einen Konverter umfasst, wobei der Empfänger dafür ausgelegt ist, das Signal in einem von dem ersten Frequenzband und dem zweiten Frequenzband zu empfangen, und der Konverter dafür ausgelegt ist, das Signal zur Übertragung in das jeweils andere von dem ersten Frequenzband und dem zweiten Frequenzband zu konvertieren;
wobei die Relaisstation ferner einen Modulator und einen Sender umfasst, wobei der Modulator dafür ausgelegt ist, die Informationen in dem ersten Frequenzband oder dem zweiten Frequenzband auf das Signal zu modulieren, und der Sender dafür ausgelegt ist, das modulierte Signal zu übertragen;
wobei die Informationen Statusinformationen in Bezug auf die Relaisstation umfassen; und wobei die Relaisstation dafür angepasst ist, das Benutzersignal erneut von dem Benutzerendgerät an das Gateway zu übertragen, während die Statusinformationen dem Benutzersignal mittels Modulation (48, 50, 51, 52, 58) durch Dämpfungs- oder Verstärkungssteuerung hinzugefügt werden.

## Revendications

1. Procédé de transmission d'informations associées à une station relais (34) depuis la station relais par l'intermédiaire d'un signal d'utilisateur, le procédé comprenant :
la modulation par la station relais des informations associées à la station relais sur le signal d'utilisateur dans une première bande de fréquences ou une seconde bande de fréquences ; et
la transmission par la station relais du signal modulé ;
dans lequel le signal d'utilisateur convoie des données associées à un terminal d'utilisateur (32), le signal passant de la station relais à une passerelle (36) connectée à la station relais ;
la communication de la station relais avec le terminal d'utilisateur dans la première bande de fréquences et avec la passerelle dans la seconde bande de fréquences qui est différente de la première bande de fréquences, la station relais recevant le signal dans une de la première bande de fréquences et de la seconde bande de fréquences et convertissant le signal en l'autre de la première bande de fréquences et de la seconde bande de fréquences pour sa transmission ;
dans lequel les informations comprennent des informations d'état relatives à la station relais ; et dans lequel la station relais retransmet le signal d'utilisateur du terminal d'utilisateur à la passerelle, tout en ajoutant les informations d'état au signal d'utilisateur au moyen d'une modulation (48, 50, 51, 52, 58) par commande d'atténuation ou d'amplification.

2. Procédé de transmission selon la revendication 1, dans lequel la station relais est une station de base de microcellule.

3. Procédé selon n'importe quelle revendication précédente, dans lequel la seconde bande de fréquences est supérieure à la première bande de fréquences.

4. Procédé selon l'une quelconque des revendications 1 à 3, dans lequel la seconde bande de fréquences est une bande de fréquences d'ondes millimétriques ou micro-ondes.

5. Procédé selon n'importe quelle revendication précédente, dans lequel la modulation comprend la modulation des informations sur le signal dans la seconde bande de fréquences, et le signal modulé est transmis (42) vers la passerelle.

6. Procédé selon l'une quelconque des revendications 1 à 4, dans lequel la modulation comprend la modulation des informations sur le signal dans la première bande de fréquences, et le signal modulé est converti dans la seconde bande de fréquences et transmis vers la passerelle.

7. Procédé selon n'importe quelle revendication précédente, dans lequel la modulation comprend la modulation des informations sur le signal par modulation d'amplitude.

8. Procédé selon n'importe quelle revendication précédente, comprenant en outre par la station relais la réception depuis la passerelle, et le décodage, d'un message de commande pour la station relais modulé sur un message de données à transmettre au terminal d'utilisateur, le message de données étant converti en fréquence par la station relais de la seconde bande de fréquences en la première bande de fréquences pour sa transmission au premier nœud.

9. Procédé selon n'importe quelle revendication précédente, comprenant en outre :
la réception au niveau d'au moins un du terminal d'utilisateur et de la passerelle du signal modulé au niveau de la station relais avec les informations associées à la station relais, et la démodulation des informations du signal pour obtenir les informations et le signal.

10. Station relais (34) configurée pour envoyer des informations associées à la station relais par l'intermédiaire d'un signal d'utilisateur,
dans laquelle le signal convoie des données associées à un terminal d'utilisateur, le signal passant entre la station relais et une passerelle ;
la station relais étant configurée pour communiquer avec le terminal d'utilisateur (32) dans une première bande de fréquences qui est une bande pour les télécommunications mobiles cellulaires et configurée pour communiquer avec la passerelle (36) dans une seconde bande de fréquences ;
la station relais comprend un récepteur et un convertisseur, le récepteur étant configuré pour recevoir le signal dans une de la première bande de fréquences et de la seconde bande de fréquences et le convertisseur étant configuré pour convertir le signal en l'autre de la première bande de fréquences et de la seconde bande de fréquences pour sa transmission ;
la station relais comprenant en outre un modulateur et un émetteur, le modulateur étant configuré pour moduler les informations sur le signal dans la première bande de fréquences ou la seconde bande de fréquences, et l'émetteur étant configuré pour transmettre le signal modulé ;
dans lequel les informations comprennent des informations d'état relatives à la station relais ; et la station relais étant adaptée pour retransmettre le signal d'utilisateur du terminal d'utilisateur à la passerelle, tout en ajoutant les informations d'état au signal d'utilisateur au moyen d'une modulation (48, 50, 51, 52, 58) par commande d'atténuation ou d'amplification.
